# EUROPÄISCHE PATENTANMELDUNG

(11) **EP 2 241 188 A1**
(43) Veröffentlichungstag der Anmeldung: **20.10.2010**
(21) Anmeldenummer: 10006155.5
(22) Anmeldetag: 06.09.2007
(51) Int. Cl.: A22C 11/02, B65G 47/61, A22C 15/00

(54) **Clipmaschine für eine Fertigungslinie zur Herstellung wurstförmiger Produkte**

(30) Priorität: 06.09.2006 DE 102006041829
(62) Teilanmeldung aus: 07017500.5
(71) Anmelder: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(57) **Zusammenfassung**

Die Erfindung betrifft eine Clipmaschine (C) für eine Fertigungslinie (FCB) zum Herstellen von wurstförmigen Produkten (B), die in einem schlauchförmigen Verpackungshüllenmaterial ein fließfähiges Füllgut, wie Wurstbrät, Dichtmasse, Granulat und dgl. aufnehmen, mit wenigstens zwei Verschließwerkzeugen, die zum Setzen und Verschließen von Clips an dem wurstförmigen Produkt (W) relativ zueinander zwischen einer Öffnungsstellung und einer Verschließstellung bewegbar sind. Die Clipmaschine (C) enthält weiterhin mindestens eine Clipspeichereinrichtung, von der Clips den Verschließwerkzeugen zuführbar sind, eine Speichereinrichtung zum Speichern eines Vorrats an Verpackungshüllenmaterial, eine Trenneinrichtung zum Abtrennen von Verpackungshüllenmaterial eines einzelnen Wurstprodukts von dem Vorrat an Verpackungshüllenmaterial, ein Füllrohr (F) zum Zuführen von Füllgut, eine Austragfördereinrichtung zum Austragen von wurstförmigen Produkten (W) aus der Clipmaschine (C) entlang einer Austragstrecke (AS) für die wurstförmigen Produkte (W) und eine Zuführeinrichtung (ZE) für flexible Aufhängeelemente (AE), aus der Aufhängeelemente (AE) beim Setzen von Clips einem der Verschließwerkzeuge zuführbar sind. Weiterhin ist vorgesehen, dass die Austragstrecke (AS) für die wurstförmigen Produkte (W) einen ersten Förderweg (110) für die wurstförmigen Produkte (W) und parallel zu dem Förderweg (110) für die wurstförmigen Produkte (W) ein von dem Förderweg (110) für die wurstförmigen Produkte (W) getrennten Förderweg (130) für das mit einem wurstförmigen Produkt (W) verbundene Aufhängeelement (AE) vorgesehen ist.

## Beschreibung

Die Erfindung betrifft eine Clipmaschine für eine Fertigungslinie zum Herstellen von wurstförmigen Produkten gemäß dem Oberbegriff des Anspruchs 1.

In der Praxis ist es bekannt, dass beispielsweise bei der Herstellung von Würsten das Wurstbrät von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und durch Setzen eines zweiten Clips verschlossen. Wenn das wurstförmige Produkt bzw. das Wurstprodukt zur weiteren Verarbeitung aufgehängt werden soll, wird üblicherweise in den zweiten Clip ein Aufhängeelement, meist eine Fadenschlaufe, eingelegt und mit diesem zweiten Clip an dem Wurstprodukt befestigt. Anschließend werden die Wurstprodukte auf Speicherstangen aufgereiht, um weiterverarbeitet, beispielsweise geräuchert, zu werden.

Aus der DE 39 35 746 A1 ist hierzu ein Verfahren und eine Vorrichtung zum mechanisierten Aufhängen von Wurstprodukten bekannt. Dabei greift ein aus zwei verschwenkbaren Teilhaken bestehendes Übergabeelement in das durch eine Fadenschlaufe gebildete Aufhängeelement ein und entnimmt das Wurstprodukt aus der Clipmaschine. Anschließend werden die beiden Haken des Übergabeelements aus der Entnahmeposition, in der das Wurstprodukt aus der Clipmaschine entnommen worden ist, in eine Übergabeposition verschwenkt. Dabei werden gleichzeitig die beiden Haken auseinander gefahren.

In der Übergabeposition wird das Wurstprodukt an ein dort bereits wartendes Förderelement eines Endlosförderers übergeben. Die Förderelemente besitzen hierzu an ihrem unteren Ende zwei beabstandete Haken, deren Abstand kleiner ist als der Abstand der gespreizten Haken des Übergabeelements. Die Haken des Förderelements greifen in die gespreizte Schlaufe des Wurstprodukts ein und nehmen dieses so von dem Übergabeelement ab. Das Übergabeelement kann dann weitergedreht werden, bis es seine Ausgangsstellung wieder erreicht hat, in der wiederum die Teilhaken aneinander anliegen.

Ein Nachteil dieser bekannten Vorrichtung besteht darin, dass die Ausrichtung des Übergabeelements zu der Entnahmeposition an der Clipmaschine und dem in der Übergabeposition befindlichen Förderelement äußerst präzise erfolgen muss. Schon bei geringsten Abweichungen können die Schlaufen von dem Übergabeelement entweder in der Entnahmeposition an der Clipmaschine nicht erfasst werden und/oder in der Übergabeposition nicht an die Förderelemente übergeben werden. Auch die diskontinuierliche Förderung durch Anhalten der Förderelemente zum Übernehmen der Wurstprodukte von dem Übergabeelement erweist sich als nachteilig, da hierdurch Schaukelbewegungen der an anderen Förderelementen hängenden Würste beim Anhalten und wieder Anfahren des Endlosförderers ausgelöst werden können, was zu zusätzlichen Belastungen der Fördereinrichtung führt. Es ist Aufgabe der vorliegenden Erfindung, eine Clipmaschine der eingangs genannten Art bereit zu stellen, die die genannten Nachteile überwindet und ein kontinuierliches, prozesssicheres Beladen von Speichestangen mit an Aufhängeelementen hängenden wurstförmigen Produkten ermöglicht.

Die vorstehende Aufgabe wird durch die Merkmale des Anspruchs 1 gelöst. In den sich daran abschließenden Ansprüchen 2 bis 15 finden sich vorteilhafte Ausgestaltungen hierzu.

Insbesondere wird eine Clipmaschine für eine Fertigungslinie zum Herstellen von wurstförmigen Produkten vorgesehen, wobei die wurstförmigen Produkte in einem schlauchförmigen Verpackungshüllenmaterial ein fließfähiges Füllgut, wie Wurstbrät, Dichtmasse, Granulat und dgl. aufnehmen. Die Clipmaschine selber enthält wenigstens zwei Verschließwerkzeuge, die zum Setzen und Verschließen von Clips an dem wurstförmigen Produkt relativ zueinander zwischen einer Öffnungsstellung und einer Verschließstellung bewegbar sind, mindestens eine Clipspeichereinrichtung, von der Clips den Verschließwerkzeugen zuführbar sind, eine Speichereinrichtung zum Speichern eines Vorrats an Verpackungshüllenmaterial, eine Trenneinrichtung zum Abtrennen von Verpackungshüllenmaterial eines einzelnen Wurstprodukts von dem Vorrat an Verpackungshüllenmaterial, ein Füllrohr zum Zuführen von Füllgut, eine Austragfördereinrichtung zum Austragen von wurstförmigen Produkten aus der Clipmaschine entlang einer Austragstrecke für die wurstförmigen Produkte und eine Zuführeinrichtung für flexible Aufhängeelemente, aus der Aufhängeelemente beim Setzen von Clips einem der Verschließwerkzeuge zuführbar sind, wobei die Austragstrecke für die wurstförmigen Produkte einen ersten Förderweg für die wurstförmigen Produkte und parallel zu dem Förderweg für die wurstförmigen Produkte ein von dem Förderweg für die wurstförmigen Produkte getrennten Förderweg für das mit einem wurstförmigen Produkt verbundene Aufhängeelement vorgesehen ist.

Dadurch werden zum einen die wurstförmigen Produkte sicher aus der Clipmaschine geführt, zum anderen können so die Aufhängeelement optimal auf die Übergabe vorbereitet werden.

Endet der Förderweg für die wurstförmigen Produkte und der Förderweg für das mit einem wurstförmigen Produkt verbundene Aufhängeelement in einer Übergabeposition, in der ein wurstförmiges Produkt zur Übergabe für eine Weiterverarbeitung definiert bereit gehalten werden kann, ist gewährleistet, dass die wurstförmigen Produkte direkt nach der Fertigstellung zur Übergabe für eine Weiterverarbeitung gelangen.

Zweckmäßig ist an der Übergabeposition zumindest ein Übergabeelement zur Übergabe der wurstförmigen Produkte vorgesehen, das an seinem von der Clipmaschine wegweisenden Ende gabelförmig ausgestaltet ist. Dadurch kann ein entsprechend gestaltetes Förderelement das wurstförmige Produkt berührungsfrei aus der Übergabeposition entnehmen, wodurch zusätzliche Störquellen ausgeschaltet werden.

Wird wenigstens ein Sensor an der Übergabeposition vorgesehen, der das Vorhandensein eines wurstförmigen Produkts erfasst, kann hierdurch der kontinuierliche und störungsfreie Betrieb weiter sichergestellt werden.

Um Beschädigungen an den Aufhängeelementen zu vermeiden, kann der Förderweg für die Aufhängeelemente durch eine Gleitschiene mit einem geeigneten Querschnitt gestaltet sein. In einem bevorzugten Ausführungsbeispiel weist die Gleitschiene einen kreisförmigen Querschnitt auf. So können die Aufhängeelemente leicht, und ohne beschädigt zu werden, an ihr entlang gleiten.

Bevorzugt weist die Gleitschiene wenigstens zwei Lagereinrichtungen auf, die insbesondere jeweils durch drei vorzugsweise in einer gleichmäßigen Teilung in Umfangsrichtung der Gleitschiene angeordnete Stützrollen gebildet sein können, wodurch die Gleitschiene hinreichend sicher abgestützt wird.

Ist die Gleitschiene zwischen den Lagereinrichtungen abgewinkelt, kann ein wurstförmiges Produkt durch sein Eigengewicht am abgewinkelten Teil der Gleitschiene entlang gleiten. Das ist dann vorteilhaft, wenn die Abwinkelung in der nähe der beschickungsmaschinenseitigen Lagereinrichtung vorgesehen ist und die Schiene nach unten abgewinkelt ist. Darüber hinaus kann durch diese Anordnung ein gegebenenfalls auftretendes Mitdrehen der Gleitschiene verhindert werden.

Um das Durchfädeln des Aufhängelements durch die Lagereinrichtungen zu erleichtern, kann weiterhin vorgesehen sein, dass die Gleitschiene im Bereich der Lagereinrichtung eine antreibbare Hohlwelle aufweist, die koaxial zu der Gleitschiene angeordnet ist.

In einer vorteilhaften Ausführungsform ist die Gleitschiene im Bereich der Lagereinrichtungen mit einer gewindeförmig umlaufenden Nut versehen, um eine Durchführung der Aufhängeelemente durch die Lagereinrichtungen zu ermöglichen. Vorzugsweise kann die gewindeförmig umlaufende Nut auf der Hohlwelle vorgesehen sein.

In einer weiteren bevorzugten Ausführung weist die Gleitschiene im Bereich der Stützrollen eine konvexe Oberfläche auf, während die Stützrollen eine entsprechend konkave Oberfläche besitzen. Dadurch wird zusätzlich zur Abstützung der Gleitschiene eine axiale Sicherung erreicht.

Es ist vorteilhaft, wenn mindestens eine der Stützrollen jeder Lagereinrichtung antreibbar ist, da hierdurch die Hohlwelle auf eine Weise angetrieben werden kann und so eine Zwangsführung der Aufhängeelemente durch die Lagereinrichtung erreicht wird.

Ist am clipmaschinenseitigen Ende der Gleitschiene ein Einfädelkegel vorgesehen, so können mit dessen Hilfe die Aufhängeelemente der wurstförmigen Produkte sicher auf die Gleitschiene geführt werden.

Eine sich an das clipmaschinenseitige Ende der Gleitschiene anschließende Fangeinrichtung für die Aufhängeelemente, die von der Gleitschiene bis in den Verschließbereich der Verschließwerkzeuge reicht, stellt sicher, dass alle gefangenen Aufhängeelemente sicher zur Gleitschiene geführt werden. In einer bevorzugten Ausführung ist die Fangeinrichtung abgewinkelt und besitzt eine kegelförmige Fangspitze.

Es ist weiterhin vorteilhaft, wenn die Aufhängeelemente durch Fadenschlaufen gebildet sind, da diese flexibel und leicht zu handhaben sind.

Ein Verfahren zum Steuern einer Fertigungslinie zur Herstellung von wurstförmigen Produkten sieht vor, dass die wurstförmigen Produkte ein fließfähiges Füllgut, wie Wurstbrät und dgl. in einem schlauchförmigen Verpackungshüllenmaterial aufnehmen. Hierbei enthält die Fertigungslinie zumindest eine Clipmaschine, in der das mit Füllgut befüllte Verpackungshüllenmaterial in einzelne wurstförmige Produkte durch Setzen von Verschlussclips portioniert und von dem Vorrat an übrigem Verpackungshüllenmaterial abgetrennt wird, wobei beim Setzen der Verschlussclips mindestens ein flexibles Aufhängeelement an dem wurstförmigen Produkt angebracht werden kann, das in der Clipmaschine getaktet zugeführt wird, und eine Beschickungsmaschine, die Speicherstangen für die Weiterverarbeitung der wurstförmigen Produkte einzeln mit wurstförmigen Produkten beschickt. Dabei werden zum Beschicken der Speicherstangen mit wurstförmigen Produkten kontinuierlich entlang eines Förderwegs umlaufende Förderelemente verwendet, die die aus der Clipmaschine auslaufenden wurstförmigen Produkte in einem zwischen der Clipmaschine und der Beschickungsmaschine vorgesehenen Übernahmebereich übernehmen. Weiterhin ist vorgesehen, dass zumindest die Umlaufgeschwindigkeit der Förderelemente der Beschickungsmaschine auf Basis einer aus der Clipmaschine abgeleiteten Steuergröße gesteuert wird.

In Folge des Steuerns zumindest der Umlaufgeschwindigkeit der Förderelemente der Beschickungsmaschine auf Basis einer aus der Clipmaschine abgeleiteten Steuergröße wird eine erste Abstimmung der Beschickungsmaschine mit der Clipmaschine und damit mit der Produktionsgeschwindigkeit in der Clipmaschine erreicht. Hierdurch kann auf einfache Weise ein gut verzahnter Fördervorgang zwischen Clipmaschine und Beschickungsmaschine bereitgestellt werden. Weiterhin wird die Möglichkeit zu einem kontinuierlichen Betrieb des Endlosförderers eröffnet. Mit anderen Worten laufen im Gegensatz zu dem Stand der Technik, bei dem ein Start-/Stoppbetrieb des Endlosförderers erfolgt, die Förderelemente des Endlosförderers gemäß der Erfindung kontinuierlich um.

Wird die Umlaufgeschwindigkeit der Förderelemente auf einem zumindest zeitabschnittsweise wenigstens annähernd konstanten Sollwert gehalten, der durch die aus der Clipmaschine abgeleiteten Steuergröße bestimmt wird, können Schaukelbewegungen der wurstförmigen Produkte minimiert werden, wodurch die Bewegung des Endlosförderers beruhigt und mechanischer Verschleiß u. a. an dem Endlosförderer verringert wird.

Für die aus der Clipmaschine abgeleitete Steuergröße können die unterschiedlichsten Werte der Clipmaschine Verwendung finden. Besonders vorteilhaft ist es, wenn die aus der Clipmaschine abgeleitete Steuergröße für die Umlaufgeschwindigkeit der Förderelemente die Zuführgeschwindigkeit der Aufhängeelemente in der Clipmaschine ist. Die Zuführgeschwindigkeit der Aufhängeelemente gibt den tatsächlichen Produktionstakt für die Herstellung der wurstförmigen Produkte in der Clipmaschine vor, da an jedem der Produkte ein Aufhängeelement befestigt wird. Selbst wenn nur an jedem zweiten, dritten usw. wurstförmigen Produkt ein Aufhängelement angebracht wird, was, um Wurstpaare bzw. Wurstketten zu bilden, grundsätzlich möglich ist, stellt die Zuführgeschwindigkeit für die Aufhängeelemente eine derjenigen aus der Clipmaschine ableitbaren Größen dar, die die tatsächliche Produktionsgeschwindigkeit in der Clipmaschine gut beschreibt.

Da aber die Umlaufgeschwindigkeit der Förderelemente zusätzlichen Störungen, wie beispielsweise Störungen in Folge aufgetretenen Verschleißes oder in Folge von Schaukelbewegungen der wurstförmigen Produkte, ausgesetzt ist, die zu Schwankungen in der Umlaufgeschwindigkeit der Förderelemente führen, ist es von Vorteil, der Steuerung der Umlaufgeschwindigkeit eine Regelung zu überlagern.

Die Regelung kann dabei auf Basis verschiedener Regel- und Führungsgrößen erfolgen. Beispielsweise kann vorgesehen sein, dass mit der der Steuerung der Umlaufgeschwindigkeit überlagerten Regelung der Zeitpunkt des Erreichens einer Übernahmeposition in der Beschickungsmaschine durch die Förderelemente zum kontinuierlichen Übernehmen von wurstförmigen Produkten geregelt wird. Hierdurch kann gewährleistet werden, dass sich zum Übernahmezeitpunkt immer ein Produkt in der Übernahme- bzw. Übergabeposition befindet.

Die eigentliche Regelung selbst kann wiederum auf unterschiedlichen Wegen erfolgen. So kann die Regelung der Umlaufgeschwindigkeit der Förderelemente auf Basis der Abweichungstendenz des Abstandes der Förderelemente von einer vorbestimmten Position an dem Förderweg der Förderelemente durchgeführt werden. Denn mit der Ermittlung der Abweichungstendenz kann der Einfluss fast aller Störungen auf die Umlaufgeschwindigkeit der Förderelemente erfasst und korrigiert werden. Bei Zunahme der Abweichungstendenz wird die Umlaufgeschwindigkeit der Förderelemente erhöht und bei Abnahme der Abweichungstendenz verringert.

Auch für die vorbestimmte Position kann jede geeignete Position entlang des Förderwegs der Förderelemente ausgewählt werden. Da die Übernahmeposition der Förderelemente, in der sie ein wurstförmiges Produkt von der Clipmaschine übernehmen, eine klar definierte Position ist, kann es weiterhin vorteilhaft sein, als die vorbestimmte Position die Übernahmeposition der Förderelemente in der Beschickungsmaschine zur Übernahme der aus der Clipmaschine auslaufenden wurstförmigen Produkte zu wählen. Hierdurch kann gewährleistet werden, dass sich zum Übernahmezeitpunkt immer ein Förderelement in der Übernahmeposition befindet.

Die Bestimmung der Abweichungstendenz kann wiederum auf die verschiedensten Art und Weisen erfolgen. So kann zur Bestimmung der Abweichungstendenz der Abstand eines bestimmten Förderelements von der vorbestimmten Position in einem Umlauf entlang des Förderwegs mit dem Abstand des bestimmten Förderelements von der vorbestimmten Position in einem nachfolgenden Umlauf verglichen werden. Alternativ kann zur Bestimmung der Abweichungstendenz der Abstand eines bestimmten Förderelements von der vorbestimmten Position in einem Umlauf entlang des Förderwegs mit dem Abstand des nachfolgenden Förderelements von der vorbestimmten Position in dem gleichen Umlauf verglichen werden. In beiden Fällen kann sehr genau die Entwicklung der Umlaufgeschwindigkeit der Förderelemente erfasst und durch die Regelung entsprechend schnell auf Veränderungen reagiert werden. Neben den bereits erwähnten Maschinen können bei der Fertigungslinie noch weitere Maschinen hinzugefügt werden. So kann beispielsweise eine vorzugsweise getaktet betriebenen Füllmaschine in der Fertigungslinie angeordnet werden, die in der Fertigungslinie stromaufwärts der Clipmaschine bzw. entgegen der Produktionsablaufrichtung der Fertigungslinie vor der Clipmaschine angeordnet wird und die vorzugsweise das Füllgut dem Verpackungshüllenmaterial in der Clipmaschine zuführt. Hierdurch wird es ermöglicht, diese in die Steuerung der gesamten Fertigungslinie zu integrieren, wodurch eine weitere Erhöhung der Prozesssicherheit erreicht wird. Wenn der Betrieb der Füllmaschine bei einer Störung des Betriebs der Beschickungsmaschine angehalten wird, kann eine weitere Zufuhr von Füllgut zur nachgeschalteten Clipmaschine vermieden und eine drohende Verstopfung der Clipmaschine verhindert werden.

Es ist vorteilhaft, wenn bei einer Störung des Betriebs der Beschickungsmaschine der Betrieb der Clipmaschine zumindest bis zur Fertigstellung des gerade zu befüllenden wurstförmigen Produkts fortgesetzt wird und nach der Fertigstellung der Betrieb der Clipmaschine angehalten wird. So wird gewährleistet, dass sich beim erneuten Einschalten in der Clipmaschine keine halbfertigen Produkte befinden, die sofort wieder Störungen auslösen könnten.

Darüber hinaus ist es von Vorteil, wenn bei einer Störung des Betriebs der Beschickungsmaschine das Förderelement, das gerade in der Übernahmeposition der Beschickungsmaschine ein wurstförmiges Produkt von der Clipmaschine übernimmt, aus der Übernahmeposition herausgefahren wird, bevor der Betrieb der kontinuierlich umlaufenden Förderelemente angehalten wird. Beim nächsten Anfahren der Fertigungslinie ist die Übernahmeposition der Beschickungsmaschine und die Übergabeposition der Clipmaschine leer, sodass ein Produkt, das sich noch auf der Austragstrecke der Clipmaschine befindet, in die Übergabeposition gefördert werden kann.

Weiterhin ist es vorteilhaft, wenn das Anhalten der kontinuierlich umlaufenden Förderelemente erfolgt, bevor das Förderelement, das gerade in der Übernahmeposition ein wurstförmiges Produkt von der Clipmaschine übernommen hat, eine zu beschickende Speicherstange erreicht hat. Hierdurch wird die Speicherstange nicht von dem Förderelement blockiert und kann, falls dies erforderlich ist, entnommen werden.

Zur Ausgestaltung der Steuerung bzw. Regelung kann weiterhin eine Steuereinrichtung vorgesehen sein, die in der Lage ist, zumindest die Umlaufgeschwindigkeit der Förderelemente der Beschickungsmaschine auf Basis der aus der Clipmaschine abgeleiteten Steuergrößen zu steuern. Dabei kann die Steuereinrichtung auch dazu verwendet werden, zumindest den aufeinander abgestimmten Betrieb der Beschickungsmaschine und der Clipmaschine zu steuern. Eine Fertigungslinie zum Herstellen von wurstförmigen Produkten sieht vor , dass in einem schlauchförmigen Verpackungshüllenmaterial ein fließfähiges Füllgut, wie Wurstbrät und dgl. aufgenommen wird, wobei die Fertigungslinie zumindest aufweist: eine erfindungsgemäße Clipmaschine, in der das mit Füllgut befüllte Verpackungshüllenmaterial in einzelne wurstförmige Produkte durch Setzen von Verschlussclips portioniert und von dem Vorrat an übrigem Verpackungshüllenmaterial abgetrennt wird, wobei beim Setzen der Verschlussclips mindestens ein flexibles Aufhängeelement angebracht werden kann, das in der Clipmaschine getaktet zugeführt wird, und eine Beschickungsmaschine, die Speicherstangen für die Weiterverarbeitung der wurstförmigen Produkte einzeln mit wurstförmigen Produkten beschickt bzw. belädt und die kontinuierlich entlang eines Förderwegs umlaufende Förderelemente aufweist, welche die aus der Clipmaschine auslaufenden wurstförmigen Produkte in einem zwischen der Clipmaschine und der Beschickungsmaschine vorgesehenen Übernahmebereich übernehmen, wobei eine Steuereinrichtung vorgesehen ist, welche in der Lage ist, zumindest die Umlaufgeschwindigkeit der Förderelemente der Beschickungsmaschine auf Basis einer aus der Clipmaschine abgeleiteten Steuergröße zu steuern.

In einer bevorzugten Ausführungsform der Fertigungslinie ist die Förderstrecke zwischen der Clipmaschine und der Beschickungsmaschine unterbrochen, wobei vorzugsweise die Unterbrechung der Förderstrecke zwischen Clipmaschine und Beschickungsmaschine durch einen Übernahmebereich gebildet ist, in dem der Förderweg der Clipmaschine in einer Übergabeposition endet und in dem die Förderelemente der Beschickungsmaschine in einer beschickungsmaschinenseitigen Übernahmeposition die in der clipmaschinenseitigen Übergabeposition befindlichen wurstförmigen Produkte einzeln übernehmen.

Durch eine solche Anordnung wird der physische Kontakt zwischen den Komponenten der Fertigungslinie unterbrochen, wodurch es möglich ist, die Clipmaschine für den

Darmraupenwechsel, sowie den Wechsel des Füllrohrs, abzuschwenken, ohne dass die Beschickungsmaschine bewegt werden muss. Darüber hinaus bedarf es keiner präzisen Positionierung der Clipmaschine gegenüber der Beschickungsmaschine. Bei vorzunehmenden Wartungsarbeiten an einer der beiden Maschinen kann diese jeweils aus dem Verbund der Fertigungslinie hierdurch herausgenommen werden, ohne dass die andere Maschine bewegt werden muss. Die Clipmaschine kann abschwenken, zum Beispiel zum Aufziehen einer neuen Darmraupe, ohne dass die Beschickungsmaschine bewegt werden muss.

Wie bereits vorstehend erwähnt worden ist, können in der Fertigungslinie neben einer erfindungsgemäßen Clipmaschine und einer Beschickungsmaschine noch weitere Maschinen vorgesehen sein, wie beispielsweise eine Füllmaschine zum Zuführen von Füllgut an das Verpackungshüllenmaterial in der Clipmaschine, die in der Fertigungslinie stromaufwärts der Clipmaschine angeordnet ist.

Weitere vorteilhafte Ausgestaltungen sowie ein Ausführungsbeispiel der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine schematische Übersichtsdarstellung einer Fertigungslinie, bei der eine erfindungsgemäße Clipmaschine zum Einsatz gelangt;
- Fig. 2:: eine Ansicht einer Beschickungsmaschine als Teil der in Fig. 1 gezeig- ten Fertigungslinie mit einer Austragstrecke für wurstförmige Produkte aus der erfindungsgemäßen Clipmaschine;
- Fig. 2a:: eine schematische Darstellung einer Übergabeposition der erfin- dungsgemäßen Clipmaschine an der Beschickungsmaschine inner- halb der in Fig. 1 wiedergegebenen Fertigungslinie in Draufsicht und in Seitenansicht ;
- Fig. 3:: eine teilweise geschnittene Seitenansicht der in Fig. 2 gezeigten Austragstrecke für die wurstförmigen Produkte aus der erfindungsge- mäßen Clipmaschine;
- Fig.4:: eine schematische Darstellung einer Lagereinrichtung einer Gleit- schiene innerhalb der in den Fig. 2 und 3 gezeigten Austragstrecke der Clipmaschine gemäß der Erfindung;

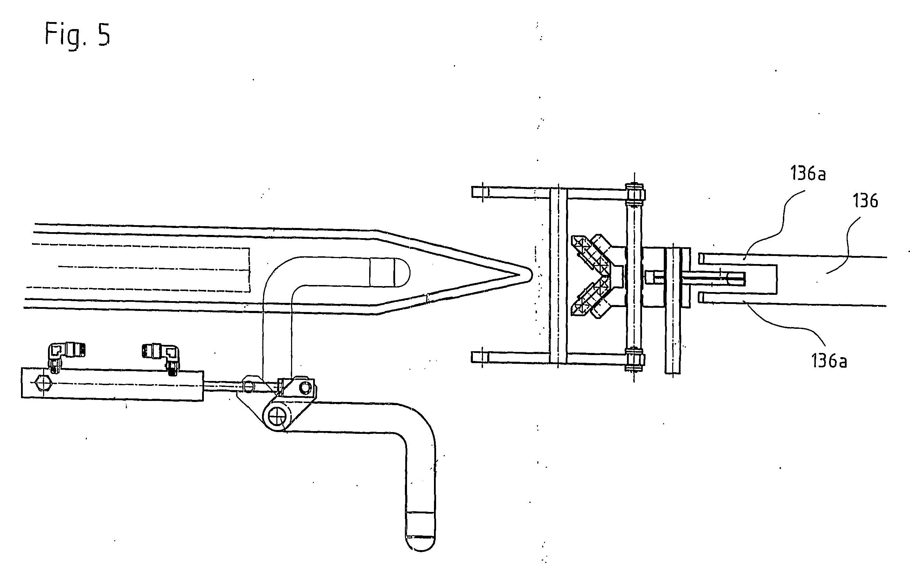

- Fig. 5:: eine schematische Draufsicht der in Fig. 2a gezeigten Übergabe- position von der Clipmaschine an die Beschickungsmaschine;

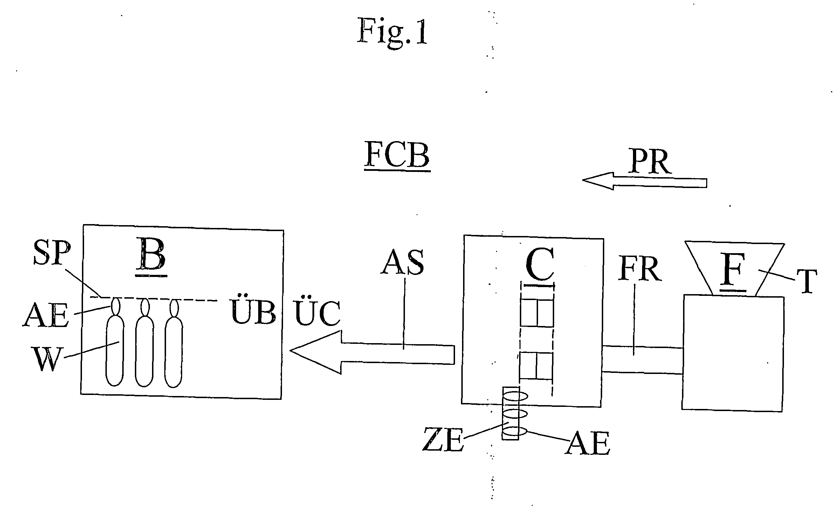

In Fig. 1 ist eine Fertigungslinie FCB in ihrem prinzipiellen Aufbau schematisch wiedergegeben. Dieser Aufbau wird nachstehend in seinen Grundstrukturen erläutert.

Die Fertigungslinie FCB dient zur Herstellung von wurstförmigen Produkten bzw. von Wurstprodukten W. Generell kann die Fertigungslinie FCB gemäß der Erfindung für jedes fließfähige Füllgut, d.h. also auch Granulat, Flüssigkeiten usw. verarbeiten, das in ein Verpackungshüllenmaterial einfüllbar und als wurstförmiges Produkt portionierbar ist. Wie aus Fig. 1 entnehmbar ist, setzt sich die Fertigungslinie FCB aus einer Füllmaschine F, einer erfindungsgemäßen Clipmaschine C und einer Beschickungsmaschine B zusammen, die entsprechend ihrer Funktion in dieser Reihenfolge, die der Produktionsablaufrichtung PR der Fertigungslinie FCB entspricht, nacheinander angeordnet sind. Dabei wird aus der Füllmaschine F ein dort einem Fülltrichter T zugeführtes Füllgut, hier Wurstbrät, diskontinuierlich oder kontinuierlich mittels einer geeigneten Fördereinrichtung, wie beispielsweise einer Förderpumpe, der Clipmaschine C zugeführt. In der Clipmaschine C wird das Wurstbrät in ein in Fig. 1 ebenfalls nicht näher dargestelltes Verpackungshüllenmaterial eingefüllt und zu einzelnen Wurstprodukten W portioniert. Anschließend wird das so hergestellte Wurstprodukt W aus der Clipmaschine C über eine Austragstrecke AS der Clipmaschine C zu einer Übergabeposition ÜC ausgetragen. Von der Übergabeposition ÜC übernimmt ein in Fig. 1 nicht näher dargestelltes Förderelement eines Endlosförderers der Beschickungsmaschine B das Wurstprodukt W in einer Übernahmeposition ÜB. In der Beschickungsmaschine B werden die einzelnen Wurstprodukte W auf einzelne Speicherstangen SP hintereinander, aber beabstandet zueinander aufgefädelt. Anschließend können die Speicherstangen SP zur Weiterverarbeitung der Wurstprodukte W aus der Beschickungsmaschine B entnommen und beispielsweise einem Räucherofen und dgl. zugeführt werden.

Die erfindungsgemäße Clipmaschine C verfügt über ein Füllrohr FR zum Zuführen des Füllguts aus der Füllmaschine F und ist über dieses mit der Füllmaschine F verbunden. Das Füllrohr FR kann dabei auch als Speicher für den Vorrat an Verpackungshüllenmaterial dienen, der in der Clipmaschine C verarbeitet wird. Des Weiteren verfügt die Clipmaschine C über eine vorzugsweise durch ein Förderband gebildete Zuführeinrichtung ZE für flexible Aufhängeelemente AE. Die Aufhängeelemente AE, die vorzugsweise durch Fadenschlaufen gebildet sind, liegen dabei auf einem einseitig mit einem Kleber beschichteten Trägerband, von dem sie in der Clipmaschine C einzeln durch eine nicht näher dargestellte Matrize eines Clipsetz- und Clipschließwerkzeugs abgezogen werden. Wie aus Fig. 1 entnommen werden kann, ist die Zuführeinrichtung ZE für die Aufhängeelemente AE so an der Clipmaschine C im Bereich der Clipsetz- und Clipverschließwerkzeuge angeordnet, dass ihre Förderrichtung zumindest annährend senkrecht zur Produktionsablaufrichtung PR in der Fertigungslinie FCB verläuft.

In der Clipmaschine C wird das schlauchförmige Verpackungshüllenmaterial mit dem Wurstbrät befüllt und durch Setzen sowie Verschließen von Clips an entsprechenden Stellen in bekannter Weise zu Wurstprodukten portioniert. Dabei wird gleichzeitig an einem Ende jedes wurstförmigen Produkts W ein flexibles Aufhängeelement AE befestigt, das von der Zuführeinrichtung ZE in das Clipsetz- und Clipverschließwerkzeug der Clipmaschine C eingelegt wurde. Anschließend wird das fertige Wurstprodukt W auf der Austragstrecke AS aus der Clipmaschine C ausgetragen. Die Austragstrecke AS der Clipmaschine C endet dabei in der Übergabeposition ÜC, an der die Wurstprodukte W von in Fig. 1 nicht näher dargestellten Förderelemente in einer Übernahmeposition ÜB der Beschickungsmaschine B einzeln übernommen und den Speicherstangen SP zugeführt werden. Die Übergabeposition ÜC am Ende der Austragstrecke AS der Clipmaschine C und die Übernahmeposition ÜB der Beschickungsmaschine B, in der die Förderelemente ein Wurstprodukt W, welches sich in der Übergabeposition ÜC der Clipmaschine C befindet, übernehmen, bilden zusammen einen Übernahmebereich ÜB, ÜC.

Es ist noch anzumerken, dass neben der vorstehend beschriebenen Vorgehensweise, an jedem Wurstprodukt W ein Aufhängelement AE anzubringen, auch die Möglichkeit besteht, ein Aufhängeelement AE an jedem zweiten, dritten usw. Wurstprodukt W anzubringen, wobei dann das Verpackungshüllenmaterial zwischen dem ersten, zweiten, dritten usw. Wurstprodukt W nicht durchtrennt wird. Hierdurch lassen sich Paare bzw. Ketten an Wurstprodukten W bilden.

In Produktionsablaufrichtung PR der Fertigungslinie FCB schließt sich an die Clipmaschine C die Beschickungsmaschine B an.

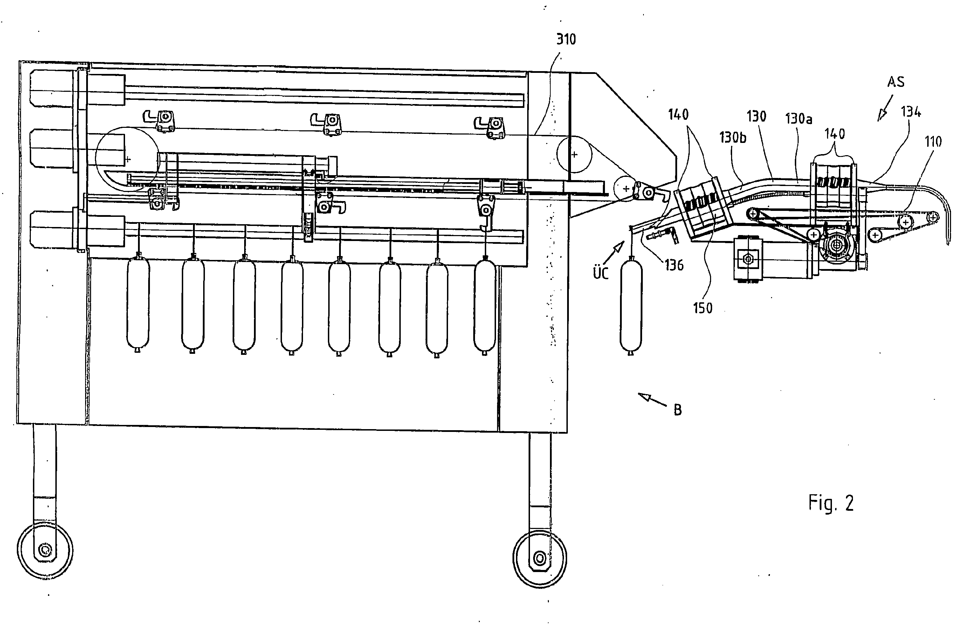

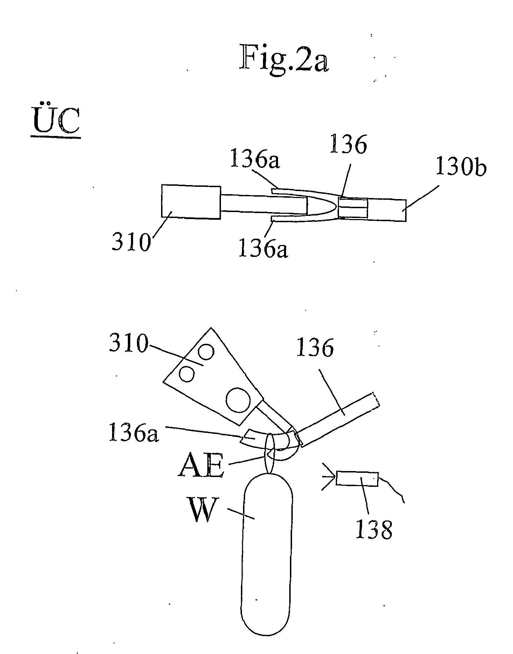

Nachstehend wird der Aufbau der Clipmaschine C, insbesondere ihrer Austragstrecke AS, unter Bezugnahme auf die Fig. 2 bis 4 näher erläutert.

In der Fig. 2 ist die Beschickungsmaschine B mit der vorgeschalteten Austragstrecke AS der Clipmaschine C wiedergegeben. An der Schnittstelle zwischen dem Ende der Austragstrecke AS der Clipmaschine C und der Beschickungsmaschine B ist der Übernahmebereich ÜC/ÜB vorgesehen, der durch die Übergabeposition ÜC der Clipmaschine C und der Übernahmeposition ÜB der Beschickungsmaschine B gebildet wird, wie dies vorstehend bereits erwähnt worden ist. Rechts von der Austragstrecke AS befindet sich die in Fig. 2 nicht näher dargestellte Clipmaschine C.

Die Austragstrecke AS der Clipmaschine C weist als wesentliche Bestandteile ein Förderband 110, eine Gleitschiene 130 und zwei die Gleitschiene 130 lagernde Lagereinrichtungen 140 auf. Dabei dient das Förderband 110 zum Transport der Wurstprodukte W, die auf dem Förderband 110 in einer horizontalen Ausrichtung mit zu der Beschickungsmaschine B bzw. der Clipmaschine C weisenden Wurstenden aufliegen. Demgegenüber ist die Gleitschiene 130 zum Führen der Aufhängeelemente AE eines durch das Förderband 110 transportierten Wurstprodukts W vorgesehen.

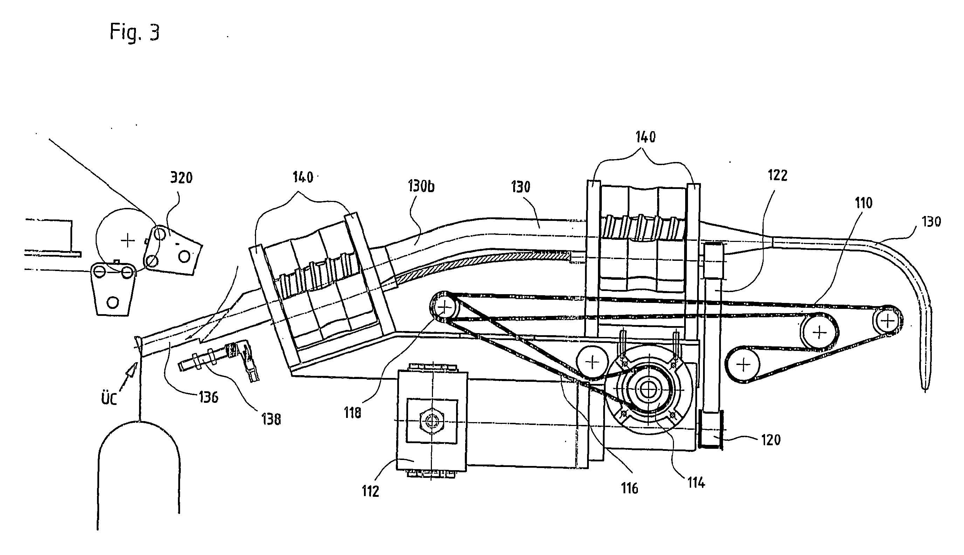

Das Förderband 110, das sich in etwa von den Clipsetz- und Verschließwerkzeugen der Clipmaschine C in die Nähe der zweiten Lagereinrichtung 140 erstreckt, wird über einen unterhalb des Förderbands 110 vorgesehenen Antriebsmotor 112 angetrieben (vgl. Fig. 3). Hierzu steht der Antriebsmotor 112 über ein nicht näher bezeichnetes Getriebe mit einer Riemenscheibe 114 in Wirkverbindung, über die ein Riemen 116 für den unmittelbaren Antrieb des Förderbands 112 geschlungen ist. Der Riemen 116 ist ebenfalls um eine in Fig. 3 links angeordnete Umlenkrolle 118 des Förderbands 110 geschlungen, die gleichzeitig als Antriebsrolle für das Förderband 110 dient. Das Förderband 110 wird weiterhin über mehrere nicht näher bezeichnete Walzen, deren Achsen senkrecht zur Transportrichtung des Förderbands 110 verlaufen, umgelenkt, und es kann so der Abstand des Förderbands zu den Verschließwerkzeugen verändert werden.

Von dem Antriebsmotor 112 wird darüber hinaus direkt von der Motorwelle eine Antriebskraft für die Gleitschiene 130 abgeleitet. Von dem unterhalb des Förderbands 110 und der Gleitschiene 130 angeordneten Winkelgetriebe 120 erstreckt sich hierzu ein, bezogen auf Fig. 3, vertikal nach oben verlaufender Antriebsriemen 122 in Richtung zu der Gleitschiene 130, der zum Drehantrieb der Gleitschiene 130 im Bereich der Lagereinrichtungen 140 in einer nachstehend noch näher beschriebenen Weise dient.

Die Gleitschiene 130 ist oberhalb des Förderbands 110 angeordnet und umfasst einen horizontal verlaufenden Gleitschienenabschnitt 130a, der sich von der Clipmaschine C nach links, bezogen auf die Fig. 2 bis 4, erstreckt sowie einen sich an das linke Ende des horizontal verlaufenden Gleitschienenabschnitts 130a anschließenden und von diesem Gleitschienenabschnitt 130a nach rechts unten schräg bzw. geneigt verlaufenden Gleitschienenabschnitt 130b. Durch das Abwinkeln der Gleitschiene 130 bewegt sich das Wurstprodukt W nach Verlassen des Förderbands 110 durch sein Gewicht selbstständig in die Übergabeposition ÜC. In beiden Abschnitten 130a, 130b weist die Gleitschiene 130 einen zumindest annährend kreisförmigen Querschnitt auf.

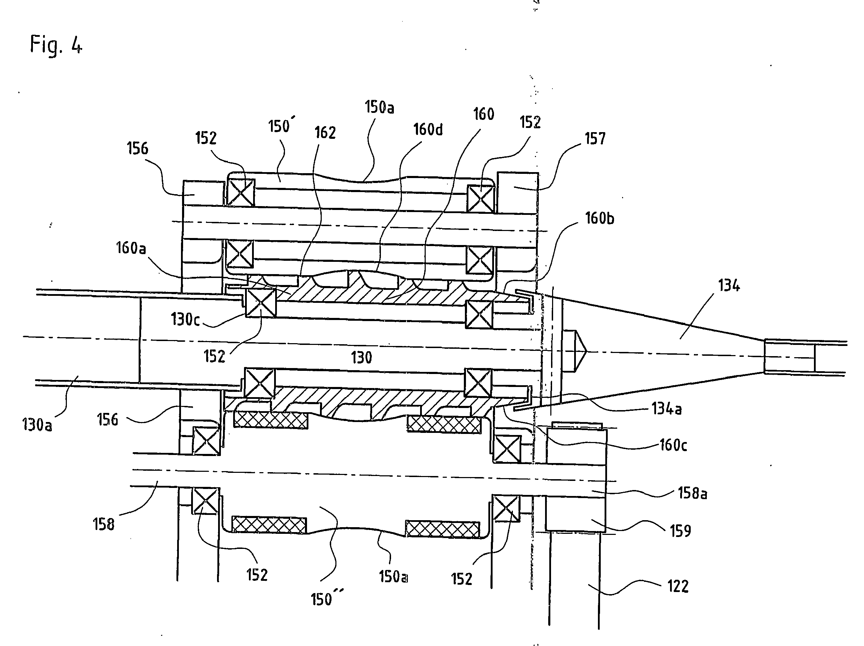

Wie insbesondere aus den Fig. 2 und 4 entnehmbar ist, ist die Gleitschiene 130 an ihrem clipmaschinenseitigen Ende mit einem Einfädelkegel 134 zum Einfädeln der Aufhängeelemente AE versehen. Der Einfädelkegel 134 bildet einen Teil einer nicht näher dargestellten Fangeinrichtung, die bis in den Verschließbereich der Clipsetz- und Clipverschließwerkzeuge der Clipmaschine C reicht, wodurch ein sicheres Auffädeln der durch die Fadenschlaufen gebildeten Aufhängeelemente AE gewährleistet ist. Der Einfädelkegel 134 ist koaxial zur Gleitschiene 130 ausgerichtet und weist mit seiner Spitze von ihr weg. Der Einfädelkegel 134 besitzt einen spitzen Kegelwinkel, wodurch das Führen eines Aufhängeelements AE erleichtert wird. An seinem zu der Gleitschiene 130 weisenden Ende ist der Einfädelkegel 134 noch mit einer ringförmig umlaufenden Ausnehmung 134a versehen.

An ihrem beschickungsmaschinenseitigen Ende der Gleitschiene 130 ist ein die Übergabeposition ÜC der Clipmaschine C definierendes, gabelförmiges Übergabeelement 136 an der Gleitschiene 130 angebracht. Wie aus der Fig. 2a ersichtlich ist, liegen die beiden Zinken 136a des gabelförmigen Übergabeelements 136 zumindest annährend in einer horizontalen Ebene. Die Enden der Zinken 136a sind so nach oben gebogen, dass ein an der Gleitschiene 130 heruntergleitendes Wurstprodukt W an ihnen hängen bleibt und sicher die Übergabeposition ÜC einnimmt, gleichzeitig aber ein Wurstprodukt W mittels eines nachstehend noch näher beschriebenen Förderelements der Beschickungsmaschine B von dem gabelförmigen Übergabeelement 136 abgenommen werden kann.

In der Nähe des gabelförmigen Übergabeelements 136 ist ein Sensor 138 angebracht, der das Vorhandensein eines Wurstprodukts W erfasst.

Zur Übergabe der Wurstprodukte W von der Austragstrecke AS der Clipmaschine C an die Beschickungsmaschine B liegen bzw. hängen die Produkte W am Ende der Austragstrecke AS in der Übergabeposition ÜC bereit, um dort von dem nachstehend noch näher beschriebenen Förderelement der Beschickungsmaschine B aufgenommen zu werden. Das gabelförmige Übergabeelement 136 weitet dabei das Aufhängeelement AE in der Weise auf, dass ein Abschnitt des Aufhängelements AE über die beiden Zinken 136a des gabelförmigen Übergabeelements 136 in einer Richtung senkrecht zu der Produktionsablaufrichtung PR der Fertigungslinie FCB gespannt verläuft. Dieser Abschnitt wird dann von dem Förderelement der Beschickungsmaschine B in der nachstehend beschriebenen Weise erfasst.

Die beiden die Gleitschiene 130 lagernden Lagereinrichtungen 140 sind jeweils gleich aufgebaut, so dass nachstehend nur eine der beiden Lagereinrichtungen 140, die clipmaschinenseitige Lagereinrichtung 140, im Zusammenhang mit insbesondere der Fig. 4 näher erläutert wird, die in dieser in einer Seitenansicht dargestellt ist. Die Lagereinrichtung 140 besteht aus drei Stützrollen 150, die in Umfangsrichtung der Gleitschiene 130 in gleichmäßiger Teilung um diese herum angeordnet sind, wobei in der Darstellung der Fig. 4 nur zwei der drei Stützrollen 150 sichtbar sind. Die obere Stützrolle 150' der beiden in Fig. 4 dargestellten Stützrollen 150 ist auf Kugellagern 152 um eine Achse 154 frei drehbar gelagert. Die Achse 154 ist in zwei an je einem der beiden stirnseitigen Enden der Achse 154 vorgesehenen Lagerwänden 156, 157 gehaltert, welche sich wiederum an dem Rahmen der Clipmaschine C abstützen.

Die in Fig. 4 sichtbare zweite, untere Stützrolle 150" ist drehfest mit einer Welle 158 verbunden und zusammen mit dieser in Kugellagern 152 drehbar an den Lagerwänden 156, 157 gelagert. Das linksseitige Ende der Welle 158 setzt sich parallel zu dem Verlauf der Gleitschiene 130 in einer flexiblen Welle fort, wie dies aus Fig. 2 entnehmbar ist, und dient als Antrieb für die entsprechende Stützrolle 150" in der beschickungsmaschinenseitigen Lagereinrichtung 140.

Wie aus Fig. 4 weiterhin hervorgeht, erstreckt sich das rechte Stirnende der Welle 158, das einen Wellenfortsatz 158a bildet, über die rechte Lagerwand 157 hinaus. Dieser Wellenfortsatz 158a steht über ein Kegel- oder Schneckenradgetriebe 159 in Dreheingriff mit der Antriebswelle 122, welche so die untere Stützrolle 150" antreibt. Weiterhin weist die untere Stützrolle 150" einen geringfügig größeren Außendurchmesser auf als die obere Stützrolle 150'.

Es ist noch zu bemerken, dass die in Fig. 4 nicht erkennbare Stützrolle 150, die, bezogen auf die Fig. 4, hinter der unteren, angetriebenen Stützrolle 150" liegt, ebenso aufgebaut ist wie die vorstehend beschriebene obere Stützrolle 150'.

Die Gleitschiene 130 ist im Bereich der Stützrollen 150 mit einer gegenüber der Gleitschiene 130 frei drehbaren Hohlwelle 160 versehen, die koaxial zu der Gleitschiene 130 auf diese aufgeschoben ist. Hierzu ist die Hohlwelle 160 auf Kugellagern 152 gelagert, die auf die starre Gleitschiene 130 aufgeschoben sind und von ihr durchsetzt werden. Das linke stirnseitige Wellenende 160a der Hohlwelle 160 schließt mit den linken stirnseitigen Enden der Stützrollen 150 ab. Dabei ragt die Hohlwelle 160 über einen Absatz 130c an der starren Gleitschiene 130 hinaus, der eine axiale Abstützung für das linke Kugellager 152 bildet, und deckt diesen Absatz 130c ab. Wie aus Fig. 4 ersichtlich ist, ragt das rechte stirnseitige Ende 160b der Hohlwelle 160 über die rechten Enden der Stützrollen 150 hinaus. Dieses rechte stirnseitige Ende 160b der Hohlwelle 160 weist eine Abschrägung 160c zur Gleitschiene 130 hin auf, mit dem die Hohlwelle 160 in die ringförmige Ausnehmung 134a des sich anschließenden Einfädelkegels 134 eingreift.

Wie weiterhin aus Fig. 4 ersichtlich ist, besitzen die Stützrollen 150 in ihrem axialen Mittenbereich an ihrer Außenumfangsfläche eine konkave Oberflächenkontur 150a und die Hohlwelle 160 an ihrem axialen Mittenbereich an ihrer Außenumfangsfläche eine entsprechend konvexe Oberflächenkontur 160d, wodurch die axiale Lagerung der Hohlwelle 160 unterstützt wird. Die Hohlwelle 160 und die Stützrollen 150 berühren sich in einer Mantellinie, wodurch die Hohlwelle 160 über die antreibbare untere Stützrolle 150" ebenfalls antreibbar ist. Hieraus ist erkennbar, dass die Gleitschiene 130 nur im Bereich der Hohlwelle 160 der beiden Lagereinrichtungen 140 drehbar ist, ihre übrigen Bauteile sind starr und ortsfest.

Die Hohlwelle 160 weist auf ihrer Oberfläche zusätzlich eine gewindeförmig umlaufende Nut 162. Diese ermöglicht die Durchführung der vom Einfädelkegel 134 eingefangenen Aufhängelemente AE durch die Lagereinrichtungen 140. Durch die Drehung der Hohlwelle 160 übernimmt die gewindeförmig umlaufende Nut 162 eine Transportfunktion für die Aufhängelemente AE. Dabei ist die Nut 162 so gestaltet, dass die Aufhängeelemente AE in Richtung der Beschickungsmaschine B transportiert werden.

Durch die vorstehend erläuterte Gestaltung der Lagereinrichtungen 140 wird eine sichere Lagerung der Gleitschiene 130 erreicht, ohne den Transport der Wurstprodukte W auf dem Transportband 110 entlang der Gleitschiene 130 zu behindern. Weiterhin wird durch den abgewinkelten Abschnitt 130b der Gleitschiene 130 erreicht, dass ein Wurstprodukt W in Folge seines eigenen Gewichts entlang des abgewinkelten Abschnitts 130b der Gleitschiene 130 in die Übergabeposition ÜC gleiten kann, ohne dass hierfür ein separater Antrieb notwendig ist. Darüber hinaus verhindert die Anordnung der beiden Lagereinrichtungen 140 in einem Winkel, dass sich die Gleitschiene 130 unbeabsichtigt mitdreht.

Es ist noch zu bemerken, dass die beiden von dem Antriebsmotor 112 mit einer Antriebskraft beaufschlagten Getriebe so aufeinander abgestimmt sind, dass das von dem Förderband 110 transportierte Wurstprodukt W und das zugehörige Aufhängelement AE gleichmäßig entlang der Austragstrecke AS förderbar sind und dass das von dem Förderband 110 am Ende der Förderstrecke des Förderbands 110 gleitende und mit seinem Aufhängeelement AE an der Gleitschiene 130 gehaltene Wurstprodukt W sicher und ohne große Pendelbewegung entlang der Gleitschiene 130, wie dies nachstehend noch näher erläutert wird, zu der Übergabeposition ÜC gleiten kann.

Unabhängig von der oben beschriebenen Steuerung der Umlaufgeschwindigkeit mit überlagerter Regelung des Zeitpunkts des Erreichens der Übernahmeposition ÜB ist der Gesamtsteuerung der Fertigungslinie FCB eine Abschaltprozedur überlagert, die bei einer Störung ein kontrolliertes Abschalten der einzelnen Komponenten der Fertigungslinie FCB übernimmt. Im störungsfreien Betrieb liegt an der Füllmaschine F ein Freigabesignal an. Tritt eine Störung in der Beschickungsmaschine B auf, so wird das Freigabesignal von der Füllmaschine F weggenommen und sie stoppt die weitere Zufuhr von Füllgut zur Clipmaschine C. Diese stellt das gerade in Arbeit befindliche Produkt fertig und stoppt dann ebenfalls ihren Betrieb. Befindet sich gerade ein Wurstprodukt W in der Übergabeposition ÜC, so wird dieses von dem aktuellen Förderelement 320 aus der Übergabe bzw. Übernahmeposition ÜC bzw. ÜB entnommen und die Beschickungsmaschine B stoppt den Betrieb des Endlosförderers 310. Wurde gerade ein Wurstprodukt W durch ein Förderelement 320 aus der Übergabe- bzw. Übernahmeposition ÜC/ÜB entnommen, so wird der Betrieb des Endlosförderers 310 gestoppt, bevor das Förderelement 320 die zu beschickende Speicherstange SP erreicht hat.Ebenso wird bei Fehlen eines Clipimpulses verfahren. Zunächst wird das Freigabesignal von der Füllmaschine F genommen, die daraufhin ihren Betrieb stoppt. Die Clipmaschine C stellt das gerade in Arbeit befindliche Produkt W fertig und stoppt dann ebenfalls seinen Betrieb. Anschließend hält auch die Beschickungsmaschine B entsprechend der oben geschilderten Vorgehensweise ihren Betrieb an.

Die beschriebene Abschaltprozedur ermöglicht, dass beim Auftreten einer Störung in der Fertigungslinie FCB diese jederzeit kontrolliert und gefahrlos abgeschaltet werden kann. Außerdem ermöglicht die Art und Weise des Abschaltens der Komponenten ein problemloses Wiedereinschalten der Fertigungslinie FCB ohne die Gefahr einer erneuten Störung durch die noch in der Fertigungslinie FCB befindlichen Produkte.

Der Produktionsablauf der erfindungsgemäßen Fertigungslinie von der Herstellung bis zur Ablage eines Wurstprodukt W geschieht wie folgt:
Von der Füllmaschine F wird ein fließfähiges Füllgut, hier Wurstbrät, der Clipmaschine C über das Füllrohr FR zugeführt. Um das Füllrohr FR herum befindet sich der Vorrat an schlauchförmigen Verpackungshüllenmaterial. Dieses wird in bekannter Weise gefüllt.
Durch das gleichzeitige Setzen und Verschließen zweier Clips in der Clipmaschine C wird zum einen das gerade befüllte Wurstprodukt W fertiggestellt und zum anderen der Anfangszipfel eines neuen noch zu befüllenden Produkts W geschaffen. Beim Setzen und
Verschließen der Clips wird dabei in den Clip, der das Wurstprodukt W fertig stellt, ein Aufhängeelement AE in Form einer Fadenschlaufe über die Zuführeinrichtung ZE zugeführt und mit diesem Clip an dem Wurstprodukt W befestigt.

Nachdem ein Wurstprodukt W durch Setzen und Verschließen der Clips, Anbringen eines Aufhängeelements AE und Abtrennen von dem Vorrat an übrigen Verpackungshüllenmaterial in der Clipmaschine C fertiggestellt wurde, wird es mit dem Aufhängeelement AE gegenüberliegenden Ende voran auf dem Förderband 110 der Austragstrecke AS, das parallel zur Gleitschiene 130 läuft, aus der Clipmaschine C in Richtung der Beschickungsmaschine B transportiert. Dabei wird die Schlaufe des Aufhängeelements AE vom Einfädelkegel 134 eingefangen und über die Gleitschiene 130 geführt. Beim Passieren der Lagereinrichtungen 140 wird das Aufhängeelement AE durch die Drehung der Hohlwelle 160 und die auf seiner Oberfläche angebrachte gewindeförmig umlaufende Nut 162 durch die Lagereinrichtungen 140 zwangsgeführt. Am Ende des Förderbandes 110 fällt das Wurstprodukt W dann durch Schwerkraft von dem Förderband 110 nach unten, wobei es mit dem Aufhängeelement AE weiterhin an der Gleitschiene 130 hängt. Mit dem Aufhängeelement AE gleitet es durch die nach unten gerichtete Abwinkelung der Gleitschiene 130 an dieser entlang, bis die Übergabeposition ÜC am gabelförmigen Element 136 erreicht ist. Befindet sich ein Wurstprodukt W in der Übergabeposition ÜC wird dies vom Sensor 138 erkannt.

### BEZEICHNUNGSLISTE

- FCB: Fertigungslinie
- F: Füllmaschine
- C: Clipmaschine
- B: Beschickungsmaschine
- PR: Produktionsablaufrichtung
- T: Fülltrichter
- AS: Austragstrecke
- ÜC: Übergabeposition
- ÜB: Übernahmeposition
- W: Wurstprodukte
- SP: Speicherstangen
- FR: Füllrohr
- ZE: Zuführeinrichtung
- AE: Aufhängeelemente
- 110: Förderband
- 112: Antriebsmotor
- 114: Riemenscheibe
- 116: Riemen
- 118: Umlenkrolle
- 120: Winkelgetriebe
- 122: Antriebsriemen
- 130: Gleitschiene
- 130a: horizontal verlaufender Gleitschienenabschnitt
- 130b: geneigt verlaufender Gleitschienenabschnitt
- 130c: Absatz
- 134: Einfädelkegel
- 134a: ringförmig umlaufenden Nut
- 136: gabelförmiges Übergabeelement
- 136a: Zinken
- 138: Sensor
- 140: Lagereinrichtungen
- 150: Stützrollen
- 150a: konkave Oberflächenkontur
- 150': obere Stützrolle
- 150": untere Stützrolle
- 152: Kugellagern
- 156: Lagerwänden
- 157: Lagerwänden
- 158: Welle
- 158a: Wellenfortsatz
- 159: Kegel- oder Schneckenradgetriebe
- 160: Hohlwelle
- 160a: stirnseitiges Wellenende
- 160b: rechtes stirnseitige Ende
- 160c: Abschrägung
- 160d: konvexe Oberflächenkontur
- 162: gewindeförmig umlaufende Nut
- 310: Endlosförderer
- 320: Förderelemente

## Patentansprüche

1. Clipmaschine (C) für eine Fertigungslinie (FCB) zum Herstellen von wurstförmigen Produkten (B), die in einem schlauchförmigen Verpackungshüllenmaterial ein fließfähiges Füllgut, wie Wurstbrät, Dichtmasse, Granulat und dgl. aufnehmen, mit wenigstens zwei Verschließwerkzeugen, die zum Setzen und Verschließen von Clips an dem wurstförmigen Produkt (W) relativ zueinander zwischen einer Öffnungsstellung und einer Verschließstellung bewegbar sind, mit mindestens einer Clipspeichereinrichtung, von der Clips den Verschließwerkzeugen zuführbar sind, mit einer Speichereinrichtung zum Speichern eines Vorrats an Verpackungshüllenmaterial, mit einer Trenneinrichtung zum Abtrennen von Verpackungshüllenmaterial eines einzelnen Wurstprodukts von dem Vorrat an Verpackungshüllenmaterial, mit einem Füllrohr (F) zum Zuführen von Füllgut, mit einer Austragfördereinrichtung zum Austragen von wurstförmigen Produkten (W) aus der Clipmaschine (C) entlang einer Austragstrecke (AS) für die wurstförmigen Produkte (W) und mit einer Zuführeinrichtung (ZE) für flexible Aufhängeelemente (AE), aus der Aufhängeelemente (AE) beim Setzen von Clips einem der Verschließwerkzeuge zuführbar sind,
**dadurch gekennzeichnet, dass** die Austragstrecke (AS) für die wurstförmigen Produkte (W) einen ersten Förderweg (110) für die wurstförmigen Produkte (W) und parallel zu dem Förderweg (110) für die wurstförmigen Produkte (W) ein von dem Förderweg (110) für die wurstförmigen Produkte (W) getrennten Förderweg (130) für das mit einem wurstförmigen Produkt (W) verbundene Aufhängeelement (AE) vorgesehen ist.

2. Clipmaschine nach Anspruch 1,
**dadurch gekennzeichnet, dass** der Förderweg (110) für die wurstförmigen Produkte (W) und der Förderweg (130) für das mit einem wurstförmigen Produkt (W) verbundene Aufhängeelement (AE) in einer Übergabeposition (ÜC) enden, in der ein wurstförmiges Produkt (W) zur Übergabe für eine Weiterverarbeitung definiert bereitgehalten werden kann.

3. Clipmaschine nach Anspruch 2,
**dadurch gekennzeichnet, dass** an der Übergabeposition (ÜC) zumindest ein Übergabeelement (136) zur Übergabe der wurstförmigen Produkte (W) vorgesehen ist, das an seinem von der Clipmaschine (C) wegweisenden Ende gabelförmig ausgestaltet ist.

4. Clipmaschine nach Anspruch 2 oder 3,
**dadurch gekennzeichnet, dass** an der Übergabeposition (ÜC) wenigstens ein Sensor (138) vorgesehen ist, der das Vorhandensein eines wurstförmigen Produkts (W) erfasst.

5. Clipmaschine nach einem der Ansprüche 1 bis 4,
**dadurch gekennzeichnet, dass** der Förderweg (130) für die Aufhängeelemente (AE) eine vorzugsweise einen kreisförmigen Querschnitt aufweisende Gleitschiene (130) enthält.

6. Clipmaschine nach Anspruch 5,
**dadurch gekennzeichnet, dass** die Gleitschiene (130) wenigstens zwei Lagereinrichtung (140) aufweist.

7. Clipmaschine nach Anspruch 6,
**dadurch gekennzeichnet, dass** die Lagereinrichtungen (140) jeweils durch drei vorzugsweise in einer gleichmäßigen Teilung in Umfangsrichtung der Gleitschiene (130) angeordnete Stützrollen (150) gebildet sind.

8. Clipmaschine nach Anspruch 6 oder 7,
**dadurch gekennzeichnet, dass** die Gleitschiene (130) im Bereich der Lagereinrichtungen (140) eine antreibbare Hohlwelle (160) aufweist, die koaxial zu der Gleitschiene (130) angeordnet ist.

9. Clipmaschine nach einem der Ansprüche 6 bis 8,
**dadurch gekennzeichnet, dass** die Gleitschiene (130) im Bereich der Lagereinrichtungen (140) mit einer gewindeförmig umlaufenden Nut (162) versehen ist.

10. Clipmaschine nach Anspruch 8 und 9,
**dadurch gekennzeichnet, dass** die gewindeförmig umlaufende Nut (162) auf der Hohlwelle (160) vorgesehen ist.

11. Clipmaschine nach einem der Ansprüche 7 bis 10,
**dadurch gekennzeichnet, dass** die Gleitschiene (130) im Bereich der Stützrollen (150) eine konvexe Oberfläche (160d) aufweist, während die Stützrollen (150) eine entsprechend konkave Oberfläche (150a) besitzen.

12. Clipmaschine nach einem der Ansprüche 5 bis 11,
**dadurch gekennzeichnet, dass** die Gleitschiene (130) zwischen den beiden Lagereinrichtungen (140) abgewinkelt ist.

13. Clipmaschine nach einem der Ansprüche 7 bis 12,
**dadurch gekennzeichnet, dass** mindestens eine der Stützrollen (150) jeder Lagereinrichtung (140) antreibbar ist.

14. Clipmaschine nach einem der Ansprüche 5 bis 13,
**dadurch gekennzeichnet, dass** die Gleitschiene (130) an ihrem clipmaschinenseitigen Ende mit einem Einfädelkegel (134) versehen ist.

15. Clipmaschine nach einem der Ansprüche 5 bis 14,
**dadurch gekennzeichnet, dass** sich an das clipmaschinenseitige Ende der Gleitschiene (130) eine Fangeinrichtung für die Aufhängeelemente (AE) anschließt, die von der Gleitschiene (130) bis in den Verschließbereich der Verschließwerkzeuge reicht.
